# EUROPÄISCHE PATENTSCHRIFT

(11) **EP 2 892 630 B1**
(45) Veröffentlichungstag und Bekanntmachung des Hinweises auf die Patenterteilung: **02.11.2016**
(21) Anmeldenummer: 13759193.9
(22) Anmeldetag: 06.09.2013
(51) Int. Cl.: B01D 39/16

(54) **VERFAHREN ZUR HERSTELLUNG EINES FILTERS FÜR DIE ADSORPTION FLÜCHTIGER KOHLENWASSERSTOFFE**
METHOD FOR PRODUCING A FILTER FOR THE ADSORPTION OF VOLATILE HYDROCARBONS
PROCÉDÉ DE PRODUCTION D'UN FILTRE SERVANT À L'ADSORPTION D'HYDROCARBURES VOLATILS

(30) Priorität: 07.09.2012 DE 102012215939
(43) Veröffentlichungstag der Anmeldung: 15.07.2015
(73) Patentinhaber: Helsatech GmbH, 95482 Gefrees (DE)
(72) Erfinder: FICK, Peter, 95448 Bayreuth (DE); ERNST, Rainer, 95463 Bindlach (DE); SCHNEIDER, Jessica, 95460 Bad Berneck (DE); WEBER, Jörg, 95032 Hof (DE)
(74) Vertreter: Dr. Gassner & Partner mbB
(86) Internationale Anmeldenummer: PCT/EP2013/068509
(87) Internationale Veröffentlichungsnummer: WO 2014/037525

(56) Entgegenhaltungen:
- WO-A1-2011/133394
- US-A1- 2007 128 434

## Beschreibung

Die Erfindung betrifft ein Verfahren zur Herstellung eines Filters aus einem Vlies und einen so hergestellten Filter.

Aus der WO 2011/133394 A1 ist ein Aktivkohlepartikel enthaltendes Faservlies und ein Verfahren zu dessen Herstellung bekannt. Das Faservlies kann diskrete Fasern eines thermoplastischen Polymers enthalten, wobei die Aktivkohlepartikel an diese Fasern gebunden sind. Die diskreten Fasern können thermoplastische Multi-Komponentenfasern mit zumindest einer ersten Region mit einer ersten Schmelztemperatur und einer zweiten Region mit einer zweiten Schmelztemperatur umfassen. Dabei ist die erste Schmelztemperatur niedriger als die zweite Schmelztemperatur. Dabei kann es sich beispielsweise um Bikomponentenfasern handeln, wobei ein Mantel der Faser von der ersten Region und ein von dem Mantel umgebener Kern von der zweiten Region der Faser gebildet ist.

Das Dokument US1007/128434 A1 offenbart ein Verfahren zur Herstellung eines Artikels, welches als Adsorptionsfilter verwendet werden könnte, aus einem Vlies, wobei das Vlies thermisch fusionierbare Fasern umfasst. Die Fasern können eine Mantel und einem Kern aus Bikomponentenfasern umfassen, wobei der Kern aus Polyolefin, Polyester und Polyamid bestehen kann und der Mantel aus einem Harz, welches unter dem Einfluss von Hitze und Feuchtigkeit ein Gel formen kann. Vorzugsweise ist der Schmelzpunkt des Kernpolymers höher als die Erweichungstemperatur des Harzes. An die Oberfläche der Fasern werden mittels eines Bindemittels, welches das selbe Harz wie das Mantelharz der Fasern sein kann. Aktivkohlepartikel gebunden. Das Vlies wird durch Ausüben von Druck und durch eine Temperatur von 140°C mittels einer Prägeform in eine gewünschte Form gebracht.

Durch Erhitzen des Vlieses auf eine Temperatur von zumindest der ersten Schmelztemperatur und weniger als der zweiten Schmelztemperatur werden die Aktivkohlepartikel an das Vlies gebunden, wobei zumindest ein Teil der Aktivkohlepartikel an die zumindest eine erste Region von zumindest einem Teil der Multi-Komponentenfasern gebunden werden, während zumindest ein Teil der diskreten Fasern an einer Vielzahl von Schnittpunkten mit der ersten Region der Multi-Komponentenfasern verbunden werden. Beim Abkühlen des Materials der ersten Region verfestigt sich dieses und hält dadurch das Vlies zusammen, ohne dass dazu ein zusätzliches Bindemittel erforderlich wäre. Die Aktivkohlepartikel werden hier also durch Einschmelzen in die Oberfläche der Multi-Komponentenfaser an diese gebunden, ohne jedoch einen wesentlichen Anteil der Aktivkohlepartikeloberfläche mit geschmolzenem Material der ersten Region abzudecken. Dennoch lässt sich auf diese Art und Weise nicht verhindern, dass die Adsorptionsleistung der Aktivkohlepartikel durch geschmolzenes Material der ersten Region vermindert wird.

Das Faservlies kann zusätzliche, anders aufgebaute Schichten, wie beispielsweise eine Träger- und eine Deckschicht umfassen. Nachträgliche Bearbeitungsschritte können ein Prägen umfassen. Unter einem Prägen wird üblicherweise das Einbringen einer Struktur oder eines Reliefs in eine Oberfläche eines Materials verstanden. Dies kann beispielsweise mittels eines Prägestocks oder Prägestempels erfolgen.

Der erfindungsgemäß hergestellte Filter ist für die Adsorption flüchtiger Kohlenwasserstoffe, beispielsweise im Motoransaugtrakt eines Kraftfahrzeugs, ausgelegt. Das Vlies umfasst thermisch fusionierbare Fasern, wobei an die Oberfläche der Fasern mittels eines Bindemittels Aktivkohlepartikel gebunden werden. Das Binden der Aktivkohlepartikel kann beispielsweise mittels eines Foulard-Verfahrens und anschließender Trocknung erfolgen. Es kann auch dadurch erfolgen, dass das Vlies durch eine Bindemittel und Aktivkohlepartikel enthaltende Dispersion gezogen und anschließend getrocknet wird.

Derart hergestellte Filter sind im Stand der Technik bekannt. Sie werden üblicherweise in einem Einbaurahmen oder einem Gehäuse fixiert, um sie in einer gewünschten Position zu halten. Die Form des Einbaurahmens oder des Gehäuses lässt sich oft nicht ohne Weiteres der gewünschten Form an der Stelle anpassen, an welcher der Filter eingebaut werden soll, so dass die Einbaustelle an den Einbaurahmen oder das Gehäuse angepasst werden muss, um dort entsprechenden Platz bereitzustellen.

Aufgabe der vorliegenden Erfindung ist es, ein Verfahren zur Herstellung eines Filters anzugeben, welches eine weniger aufwendige Herstellung des Filters und eine bessere Anpassung an einen Ort, an dem der Filter eingebaut werden soll, bei gleichzeitig hoher Leistungsfähigkeit des Filters erlaubt. Weiterhin soll ein so hergestellter Filter angegeben werden.

Die Aufgabe wird durch die Merkmale der Ansprüche 1 und 16 gelöst. Zweckmäßige Ausgestaltungen der Erfindung ergeben sich aus den Merkmalen der Ansprüche 2 bis 15 und 17.

Erfindungsgemäß ist ein Verfahren gemäß Anspruch 1 zur Herstellung eines Filters gemäß Anspruch 16 für die Adsorption flüchtiger Kohlenwasserstoffe aus einem Vlies vorgesehen. Bei dem Vlies handelt es sich im Allgemeinen um ein textiles Flächengebilde aus Fasern, die auf irgendeine Weise zu einer Faserschicht zusammengefügt und auf irgendeine Weise miteinander verbunden sind, ohne jedoch regelmäßig miteinander verkreuzte oder verschlungene Garne zu umfassen, wie es z. B. bei einem gewebten oder gewirkten oder durch Stricken hergestellten Textil der Fall ist. Auch die Art der Verfestigung des Vlieses ist beliebig. Es kann sich bei dem Vlies beispielsweise um ein Nadelvlies, Spinnvlies, Wirrlage-Vlies oder einen Filz, insbesondere einen Nadelfilz handeln.

Dadurch, dass der Schmelzpunkt oder Schmelzbereich höher liegt als die Temperatur, auf die das Vlies gebracht wird, kann die jeweilige Oberfläche der Aktivkohlepartikel - wenn die Fasern ausschließlich aus einem thermoplastischen Kunststoff bzw. thermoplastischen Kunststoffen mit einem Schmelzpunkt oder Schmelzbereich oberhalb von 200°C bestehen - nicht von geschmolzenem Kunststoff bedeckt werden, so dass eine Verminderung der Adsorptionsfähigkeit der Aktivkohlepartikel dadurch vermieden wird. In diesem Fall erfolgt also kein, auch nur teilweises, Einschmelzen der Partikel in den Kunststoff. Das Bindemittel kann dagegen so gewählt werden, dass es die Adsorptionsfähigkeit der Aktivkohlepartikel nicht oder zumindest nicht wesentlich vermindert. Durch die Temperatur von höchstens 190°C erfolgt jedoch eine Erweichung des Kunststoffs. Diese ermöglicht das in Form bringen und das anschließende Beibehalten dieser Form nach einem Abkühlen des Vlieses unter die Erweichungstemperatur des Kunststoffs. Weiterhin ermöglicht die Erweichung eine höhere Verdichtung des Vlieses. Die so erreichte hohe Dichte bleibt nach einem Abkühlen des Vlieses auf eine Temperatur unter die Erweichungstemperatur erhalten.

Bei der Form, in welche das Vlies gebracht wird, handelt es sich im Allgemeinen um eine dreidimensionale Form, d. h. der resultierende Filter erstreckt sich in mehr als eine Ebene. Die Prägeform ist daher keine Prägeform, welche lediglich eine Struktur in die Oberfläche des Vlieses einbringt, sondern eine Pressform, welche den Filter - ähnlich einer Form beim Gesenkschmieden - in die dreidimensionale Form bringt.

Durch das Verbinden einer Mehrzahl von Lagen des Vlieses kann eine sehr hohe Adsorptionsfähigkeit des Filters bereit gestellt werden, da die Aktivkohlepartikel an die Oberfläche der Fasern in den einzelnen Lagen des Vlieses separat gebunden werden und dabei insgesamt mehr Aktivkohlepartikel gebunden werden können als beim Binden der Aktivkohlepartikel an Fasern eines einzigen Vlieses der Gesamtdicke der Mehrzahl der Lagen des Vlieses. Dies trifft insbesondere dann zu, wenn die einzelne Lage des Vlieses an einer beim Beschichten unten liegenden Seite eine Sperrschicht, z. B. in Form eines Sperrvlieses, aufweist, die ein Ausfließen einer Dispersion der Aktivkohlepartikel und des Bindemittels verhindert, wenn diese von oben auf das Vlies aufgebracht wird.

Das Vlies kann beim erfindungsgemäßen Verfahren thermisch bereits fusionierte Fasern umfassen, die mittels eines Bindemittels mit Aktivkohlepartikeln beschichtet werden und durch das Ausüben des Drucks und durch die Temperatur nicht angeschmolzen und nicht thermisch fusioniert werden. Dies stellt einen weiteren Unterschied zu dem aus der WO 2011/133394 A1 bekannten Verfahren dar, bei dem das thermische Fusionieren mit einem Binden der Aktivkohlepartikel durch geschmolzenes Polymer einhergeht. Beim erfindungsgemäßen Verfahren wird dadurch ein teilweises Umschließen der jeweiligen Oberfläche der Partikel von dem thermoplastischen Kunststoff und damit eine Verminderung der für die Adsorption zur Verfügung stehenden Oberfläche der Aktivkohlepartikel zumindest weitgehend verhindert.

Das Prägen gemäß der WO 2011/133394 A1 ist ein übliches Prägen, d. h. das Einbringen eines Reliefs in eine Oberfläche. Ein Verfahren, bei dem die gesamte Oberfläche in eine spezielle Form gebracht wird, ist aus dieser Druckschrift nicht bekannt. Die gemäß dieser Druckschrift offenbarten zusätzlichen Schichten sind im Gegensatz zu den erfindungsgemäß vorgesehenen mehreren Lagen des Vlieses anders aufgebaut als das Vlies selbst. Sie enthalten keine Aktivkohlepartikel und tragen nicht zu einer Steigerung der Adsorptionsfähigkeit bei.

Die Fasern des Vlieses können mindestens eine einen Mantel und einen Kern aufweisende Bikomponentenfaser umfassen. Dabei weist der Kern im Allgemeinen eine höhere Erweichungstemperatur als der Mantel auf. Der thermoplastische Kunststoff gemäß der vorliegenden Erfindung kann ein Polyester oder Polyester-Copolymerisat sein, insbesondere ein Polyester, der aus einer Vielzahl identischer Einheiten aufgebaut ist. Ein solcher Polyester kann in verschiedenen Formen vorliegen, die sich z. B. im Vernetzungsgrad und/oder einer Molekülkettenlänge unterscheiden. Dadurch kann beispielsweise die Bikomponentenfaser aus einem einzigen Polyester im Sinne der vorliegenden Erfindung bestehen, wobei sich die Komponenten der Bikomponentenfaser durch unterschiedliche Vernetzungsgrade und/oder unterschiedliche Molekülkettenlängen unterscheiden. Die Komponenten können dadurch unterschiedliche Schmelz- oder Erweichungstemperaturen aufweisen.

Es hat sich gezeigt, dass ein nach dem erfindungsgemäßen Verfahren hergestellter Filter sehr leistungsfähig ist und durch ein mit dem in Form bringen einhergehendes Prägen nur geringfügig an Leistungsfähigkeit verliert. Das Vlies mit der genannten Spezifikation kann eine verhältnismäßig große Menge an Aktivkohlepartikeln aufnehmen und ist auch dadurch sehr leistungsfähig. Das Bindemittel kann ein Acrylat, Acrylnitril-Butadien, Acrylat-Vinylacetat, Ethylen-Vinylacetat, Polyurethan, Polyvinylacetat-Homopolymer, Polyvinylidenchlorid, Silikon, Styrolacrylat und/oder Styrolbutadien umfassen. Bei dem Acrylat kann es sich beispielsweise um Acronal DS 2373 der Firma BTC Speciality Chemical Distribution, Maarweg 163 / 165, 50887 Köln, handeln.

Beim erfindungsgemäßen Verfahren können die Aktivkohlepartikel dadurch gebunden werden, dass eine Dispersion der Aktivkohlepartikel und des Bindemittels in einem polaren Lösungsmittel, insbesondere einem wässrigen Lösungsmittel, insbesondere Wasser, auf das Vlies aufgebracht wird und das Vlies dann auf eine Temperatur oberhalb des Siedepunkts des Lösungsmittels, insbesondere oberhalb von 100°C, insbesondere auf eine Temperatur von 120°C bis 150°C, erhitzt wird. Dadurch verdampft das Lösungsmittel und es kann ein vollständiges oder zumindest weitgehend vollständiges Vernetzen des Binders erfolgen, so dass dieser beim nachfolgenden in Form bringen unter Druck und Temperatur keine oder zumindest keine wesentliche Bindewirkung mehr aufweist und dadurch nicht zu einer Verminderung der für die Adsorption bereitstehenden Oberfläche beiträgt. Weiterhin sprengt das in den Aktivkohlepartikeln enthaltene Lösungsmittel beim Verdampfen ggf. die Aktivkohlepartikel verschließendes Bindemittel auf bzw. ab.

Die Dispersion der Aktivkohlepartikel und des Bindemittels in dem polaren Lösungsmittel kann dadurch hergestellt werden, dass die Aktivkohlepartikel zuerst mit dem Lösungsmittel gesättigt werden, indem sie in dem Lösungsmittel suspendiert werden. Anschließend wird zu dieser Suspension eine Dispersion des Bindemittels in einem anderen oder demselben polaren Lösungsmittel gegeben. Durch das vorherige Sättigen der Aktivkohlepartikel mit dem Lösungsmittel wird zumindest weitgehend verhindert, dass das Bindemittel in die Aktivkohlepartikel eindringt. Das Bindemittel verbleibt also im Wesentlichen auf der Partikeloberfläche. Ein weiterer Effekt besteht darin, dass durch das Erhitzen in den mit dem Lösungsmittel gesättigten Aktivkohlepartikeln Lösungsmitteldampf entsteht, der eine die Partikel ggf. umgebende Bindemittelhülle aufsprengt, so dass nach vollständigern Verdampfen des Lösungsmittels nahezu die gesamte Partikeloberfläche zur Adsorption bereitsteht. Das Bindemittel bedeckt also nur einen geringen Teil der jeweiligen Oberfläche der Aktivkohlepartikel, ohne dabei deren Adsorptionsfähigkeit wesentlich zu vermindern.

Der Filter kann so eingebaut werden, dass er im Motoransaugtrakt eines Kraftfahrzeugs, insbesondere eines PKWs, von Luft überströmt wird. Er setzt dabei der überströmenden Luft nur einen sehr geringen Widerstand entgegen, adsorbiert aber dennoch sehr effizient flüchtige Kohlenwasserstoffe aus der Luft. Durch das in Form bringen mittels Druck und Temperatur kann ein Einbaurahmen oder ein Gehäuse zur Fixierung des Filters entfallen, weil der Filter dadurch selbst genug statische Stabilität erlangt.

Beim in Form bringen kann das Vlies in mindestens einem ersten Bereich so hoch verdichtet werden, dass dadurch die Form gehalten wird und in mindestens einem zweiten Bereich weniger hoch verdichtet werden, um dadurch im zweiten Bereich eine bessere Adsorption zu ermöglichen. Der dadurch entstehende einstückige Filter weist unterschiedlich funktionale Bereiche auf. Der erste Bereich hält die Statik des Filters aufrecht, während der zweite Bereich besser adsorbiert als der erste Bereich. Dadurch wird das Vorsehen von zwei Bauteilen, wie einem die Statik haltenden Einbaurahmen und einem ausschließlich der Adsorption dienenden Filter überflüssig. Die Produktion des Filters sowie dessen Einbau werden dadurch erheblich vereinfacht, insbesondere auch deshalb, weil der so hergestellte Filter flexibel ist und auch in einen schwer zugänglichen Bereich eines Motoransaugtrakts eines Kraftfahrzeugs eingebracht und dort fixiert werden kann.

Das Fixieren kann z. B. mittels dafür vorgesehenen Befestigungsclips erfolgen. Alternativ oder zusätzlich kann zur Fixierung des Filters bei dessen Herstellung oder danach mittels der Prägeform oder eines Stanzwerkzeugs mindestens ein Loch in den Filter gestanzt werden. Besonders vorteilhaft ist es, wenn bei Vorhandensein des oben genannten hoch verdichteten ersten Bereichs das Loch im ersten Bereich in den Filter gestanzt wird. Der Filter kann mit einem durch das Loch reichenden Befestigungsmittel, beispielsweise einem Dorn aus einem thermoplastischen Kunststoff, dessen Spitze nach einem Durchdringen des Lochs unter Hitzeeinwirkung flachgedrückt wird (einem sogenannten Heat Stake), fixiert werden. Es können eine Mehrzahl derartiger Löcher bereitgestellt werden, die mit einer Mehrzahl von Befestigungsmitteln eine gute und einfach bereitzustellende Fixierung des Filters ermöglichen.

Das in Form bringen mittels Druck und Temperatur erlaubt eine exakte Anpassung des Filters an eine Form an der Stelle, an der der Filter letztendlich lokalisiert werden soll. Somit muss nicht der Ansaugtrakt an den Filter angepasst werden, sondern der Filter kann an den Ansaugtrakt angepasst werden. Insgesamt ergibt sich dadurch und durch den Wegfall eines Einbaurahmens oder eines Gehäuses eine erhebliche Aufwands- und Kostenersparnis bei der Herstellung des Filters, beim Einbauen des Filters und beim Bereitstellen der für den Einbau des Filters vorgesehenen Stelle.

Bei einer Ausgestaltung des Verfahrens übersteigt die Temperatur, bei welcher das Vlies in die gewünschte Form gebracht wird, nicht 178°C, insbesondere nicht 170°C, insbesondere nicht 160°C, insbesondere nicht 150°C. Je niedriger die Temperatur ist, mit der das Vlies in Form gebracht wird, desto weniger Fläche der Aktivkohlepartikel wird durch erweichenden Kunststoff eingeschlossen bzw. abgedeckt und desto niedriger ist der Luftwiderstand, den das Vlies überströmender Luft entgegensetzt. Die Temperatur muss jedoch ausreichen, um zumindest einen in dem Vlies enthaltenen Kunststoff so zu erweichen, dass dadurch das Vlies wirksam in die gewünschte Form gebracht werden kann.

Das Ausüben des Drucks und der Temperatur kann für mindestens 35 Sekunden, insbesondere mindestens 45 Sekunden, insbesondere mindestens 60 Sekunden, insbesondere mindestens 90 Sekunden, insbesondere mindestens 4 Minuten, erfolgen.

Der Kunststoff kann ein Kunststoff mit einem Schmelzpunkt oder Schmelzbereich zwischen 200°C und 265°C, insbesondere zwischen 225°C und 250°C, insbesondere zwischen 230°C bis 245°C, sein. Die Erweichungstemperatur eines solchen Kunststoffs kann bis zu 60 K unterhalb der Temperatur des Schmelzpunkts liegen.

Bei der Bikomponentenfaser kann der Kern beispielsweise aus Polypropylen, Poly-(4-methyl-1-penten), Polyester, Polyethylenterephthalat (= PET), Polybutylenterephthalat oder Poly-(1,4-cyclohexylendimethylenterephthalat) oder Copolymeren oder Mischungen der vorstehenden Polymere oder Polyamid bestehen. Die Mantelkomponente kann aus Polyester, Polyethylen, Polybuten, Polypropylen oder Copolymeren oder Mischungen der vorstehenden Polymere oder Polyamid bestehen. Bei dem Polyethylen kann es sich um Niederdruckpolyethylen oder Hochdruckpolyethylen, insbesondere lineares Hochdruckpolyethylen, handeln. Bei einer Ausgestaltung des erfindungsgemäßen Verfahrens kann der Kern aus Polyester und der Mantel aus Polyester-Copolymer, der Kern aus Polyester und der Mantel aus Polyamid oder der Kern aus Polypropylen und der Mantel aus Polyethylen bestehen.

Der Kern und der Mantel der Bikomponentenfaser bestehen bei einer weiteren Ausgestaltung des Verfahrens aus Polyester oder Polyester-Copolymer, wobei der Kern aus einem Polyester oder Polyester-Copolymer mit einer höheren Erweichungstemperatur als der Mantel besteht. Dabei kann der Kern aus einem Polyester mit einer Erweichungstemperatur über 190°C und der Mantel aus einem Polyester mit einer Erweichungstemperatur zwischen 140°C und 160°C, insbesondere zwischen 145°C und 155°C, bestehen. Das Polyester kann Polyethylenterephtalat (PET) umfassen.

Der Anteil der Bikomponentenfaser(n) an den Fasern kann 10 Gew.-% bis 70 Gew.-%, insbesondere 20 Gew.-% bis 60 Gew.-%, insbesondere 40 Gew.-% bis 50 Gew.-%, betragen.

Das Vlies kann durch die Prägeform einseitig oder zweiseitig geprägt werden. Zur zweiseitigen Prägung kann das Vlies von zwei gegenüberliegenden Seiten her durch die Prägeform erwärmt werden. Dadurch kann eine auf beiden Seiten des Vlieses geprägte Oberfläche erzeugt werden.

Bei dem für das erfindungsgemäße Verfahren eingesetzten Vlies kann es sich um den von der helsatech GmbH vertriebenen thermisch verfestigten Polyester-Filz mit der Artikelnummer VL000433 handeln.

Die Erfindung betrifft weiterhin einen Filter für die Adsorption flüchtiger Kohlenwasserstoffe aus einer Mehrzahl von Lagen eines Vlieses, wobei das Vlies thermisch fusionierbare Fasern umfasst, wobei an die Oberfläche der Fasern mittels eines Bindemittels Aktivkohlepartikel gebunden sind. Die Fasern bestehen aus mindestens einem thermoplastischen Kunststoff mit einem Schmelzpunkt oder Schmelzbereich oberhalb von 200°C. Die Mehrzahl von Lagen des Vlieses sind durch Ausüben von Druck und eine Temperatur von höchstens 190°C in eine Form gebracht, wobei das Vlies in mindestens einem Bereich so hoch verdichtet ist, dass dadurch die Form aufrechterhalten wird. Der Filter kann ein nach dem erfindungsgemäßen Verfahren hergestellter Filter sein.

Nachfolgend wird die Erfindung anhand der Zeichnungen und eines Ausführungsbeispiels näher erläutert. Es zeigen:
- Fig. 1: einen erfindungsgemäßen Filter,
- Fig. 2 bis Fig. 4: einzelne Verfahrensschritte zur Herstellung dieses Filters,
- Fig. 5: eine rasterelektronenmikroskopische Aufnahme eines ausschließlich aus Polyester bestehenden Vlieses nach dem Binden der Aktivkohlepartikel mittels eines Acrylats als Bindemittel,
- Fig. 6: eine rasterelektronenmikroskopische Aufnahme des in Fig. 5 dargestellten Vlieses in geringerer Vergrößerung und
- Fig. 7: eine rasterelektronenmikroskopische Aufnahme des in den Figuren 5 und 6 dargestellten Vlieses nach dem in Form bringen des Vlieses durch Ausüben von Druck und Temperatur.

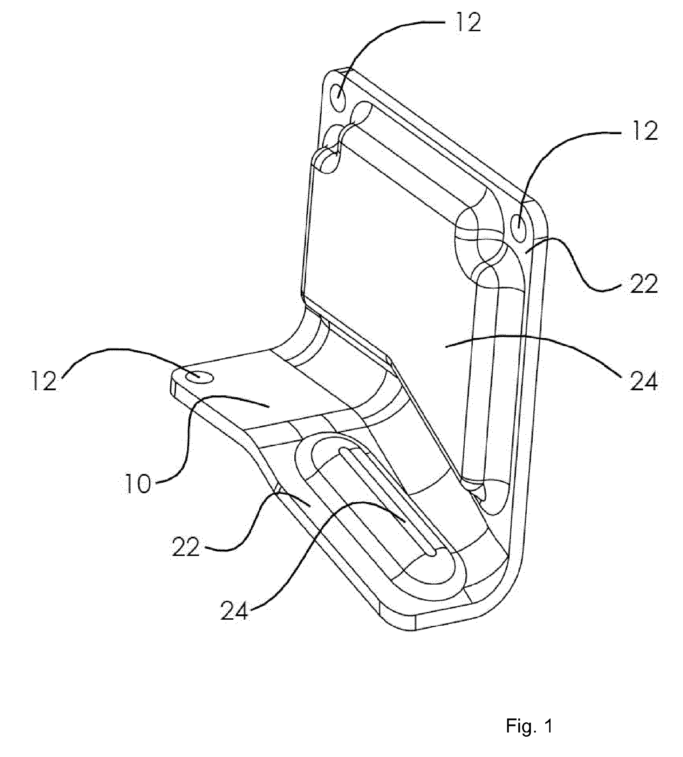

Fig. 1 zeigt den erfindungsgemäßen Filter 10 mit drei durch ein Stanzwerkzeug ausgestanzte Löcher 12. Mittels dieser Löcher 12 kann der Filter 10, beispielsweise durch Schrauben, Nieten oder sogenannter Heat Stakes, an der gewünschten Stelle befestigt werden. Der Filter weist einen ersten Bereich 22 auf, in dem das Vlies 20 so hoch verdichtet ist, dass dadurch die dreidimensionale Form aufrechterhalten wird. Der erste Bereich 22 erfüllt dadurch eine statische Funktion. In dem ersten Bereich 22 sind auch die Löcher 12 ausgestanzt. In einem zweiten Bereich 24 ist das Vlies 20 weniger hoch verdichtet. Es ermöglicht dadurch ein besseres Eindringen von über den Filter strömendem Gas und auch eine bessere Adsorption von Kohlenwasserstoffen aus diesem Gas.

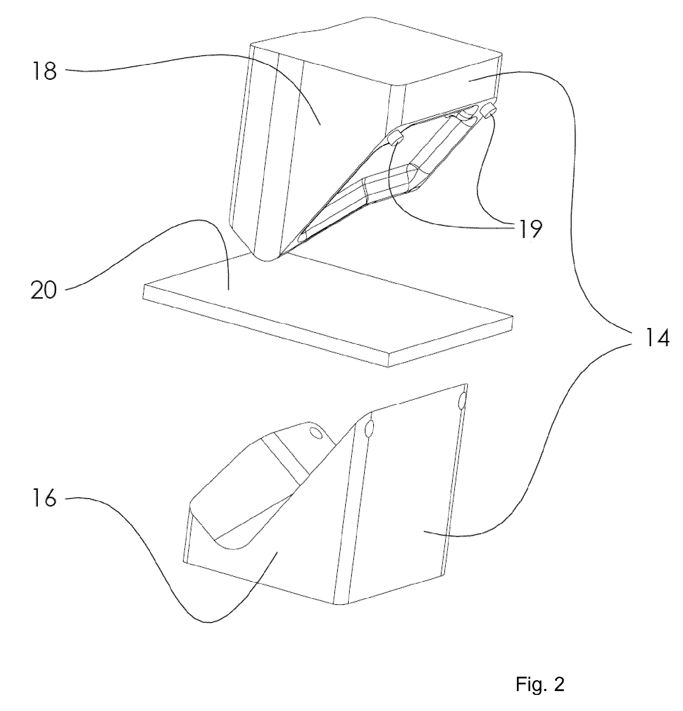

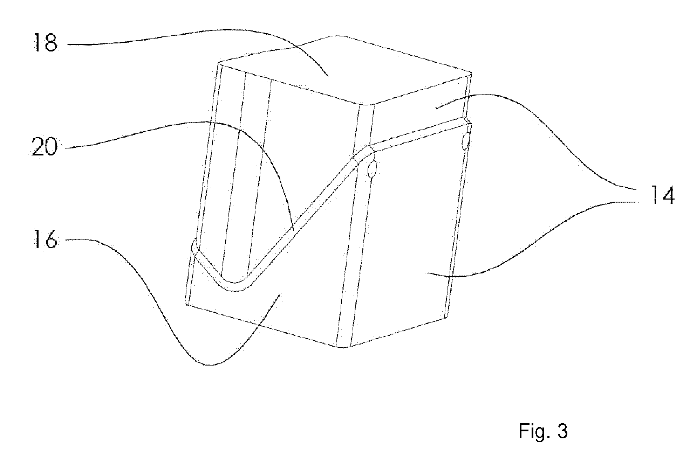

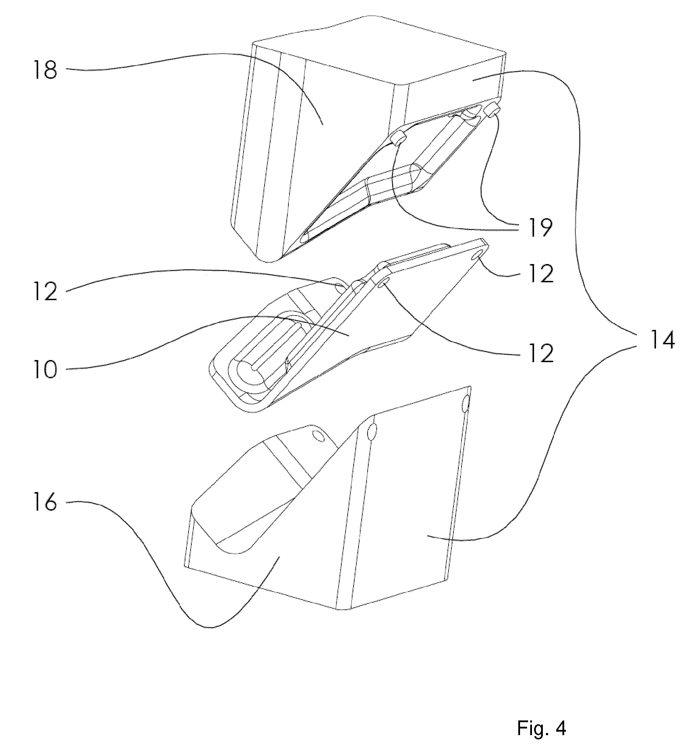

Fig. 2 zeigt eine aus einem Unterstempel 16 und einem Oberstempel 18 bestehende heiße Prägeform 14. Der Oberstempel 18 weist als Stanzwerkzeug Stifte 19 zum Ausstanzen der Löcher 12 auf. Zwischen dem Unterstempel 16 und einem Oberstempel 18 ist ein flaches Vlies 20 eingebracht. Fig. 3 zeigt die heiße Prägeform 14 in geschlossenem Zustand mit dem zwischen dem Unterstempel 16 und dem Oberstempel 18 eingeklemmten Vlies 20. Mittels des Unterstempels 16 und des Oberstempels 18 wird Druck auf das dazwischen angeordnete Vlies 20 ausgeübt und das Vlies 20 erwärmt. Nach etwa einer Minute wird der Oberstempel 18 angehoben (Fig. 4). Anschließend kann der aus dem Vlies 20 entstandene Filter 10 mit den durch die Prägeform 14 ausgestanzten Löchern 12 aus der Prägeform 14 herausgenommen werden.

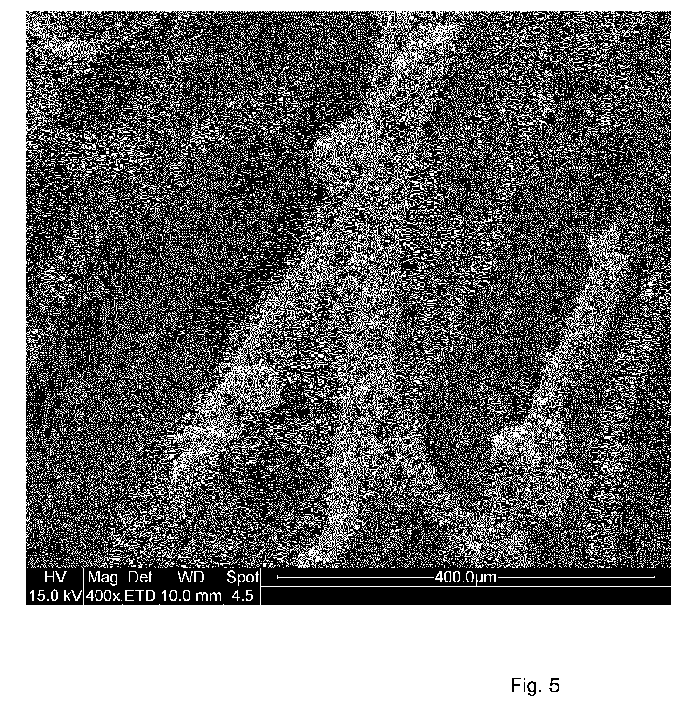

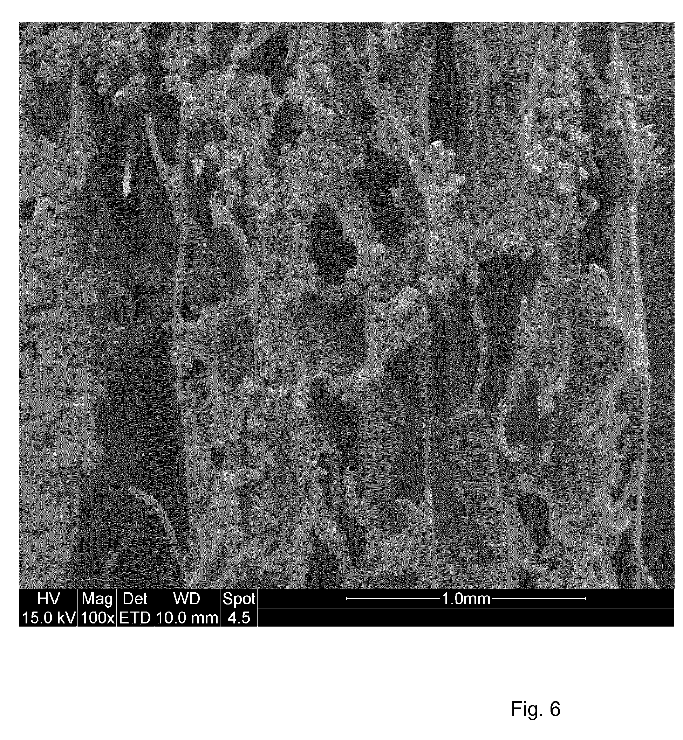

Das in den Figuren 5 und 6 dargestellte Vlies 20 wurde nach dem Binden der Aktivkohlepartikel mit dem Bindemittel auf eine Temperatur von 190°C erhitzt und wieder abgekühlt. Insbesondere aus Fig. 5 ist deutlich ersichtlich, dass die Partikel ausschließlich auf der Oberfläche der Fasern sitzen und die Oberfläche der Faser bei 190°C nicht geschmolzen ist und die Partikel nicht teilweise in die Oberfläche eingeschmolzen sind. Eine mit einem solchen Einschmelzen einhergehende Verminderung der für die Adsorption zur Verfügung stehenden Oberfläche der Aktivkohlepartikel findet hier nicht statt.

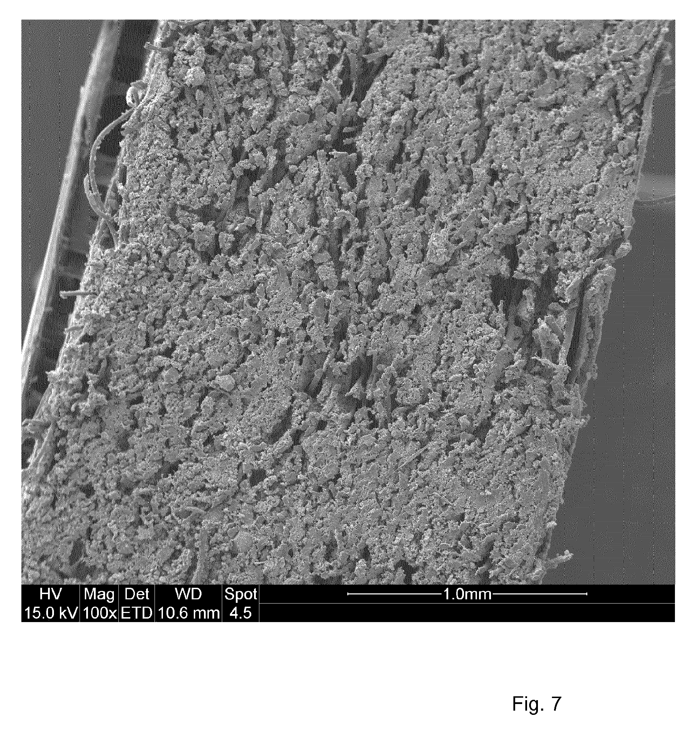

Fig. 7 zeigt zwei Lagen des in den Figuren 5 und 6 dargestellten Vlieses 20 nachdem sie durch Ausüben von Druck und durch eine Temperatur von 190°C mittels einer Prägeform 14 miteinander verbunden und in eine gewünschte Form gebracht worden sind. Daraus ist deutlich ersichtlich, dass auch nach einem solchen Verdichten eine offene Struktur vorliegt, in die Gas eindringen kann, so dass daraus flüchtige Kohlenwasserstoffe von den Aktivkohlepartikeln adsorbiert werden können.

### Bezugszeichenliste

- 10: Filter
- 12: Loch
- 14: Prägeform
- 16: Unterstempel
- 18: Oberstempel
- 19: Stift
- 20: Vlies
- 22: erster Bereich
- 24: zweiter Bereich

## Patentansprüche

1. Verfahren zur Herstellung eines Filters (10) für die Adsorption flüchtiger Kohlenwasserstoffe aus einem Vlies (20), wobei das Vlies (20) thermisch fusionierbare Fasern umfasst, wobei an die Oberfläche der Fasern mittels eines Bindemittels Aktivkohlepartikel gebunden werden, wobei die Fasern aus mindestens einem thermoplastischen Kunststoff mit einem Schmelzpunkt oder Schmelzbereich oberhalb von 200°C bestehen, wobei das Vlies (20) durch Ausüben von Druck und durch eine Temperatur von höchstens 190°C mittels einer Prägeform (14) in eine gewünschte Form gebracht wird, wobei eine Mehrzahl von Lagen des Vlieses (20) durch das Ausüben des Drucks und durch die Temperatur miteinander verbunden werden, wobei das Vlies (20) beim in Form bringen in mindestens einem ersten Bereich (22) so hoch verdichtet wird, dass dadurch die Form gehalten wird und in mindestens einem zweiten Bereich (24) weniger hoch verdichtet wird, um dadurch im zweiten Bereich (24) eine bessere Adsorption zu ermöglichen.

2. Verfahren nach Anspruch 1, wobei das Vlies (20) thermisch fusionierte Fasern umfasst.

3. Verfahren nach einem der vorherigen Ansprüche, wobei die Fasern mindestens eine einen Mantel und einen Kern aufweisende Bikomponentenfaser umfassen.

4. Verfahren nach einem der vorherigen Ansprüche, wobei die Temperatur 178°C, insbesondere 170°C, insbesondere 160°C, insbesondere 150°C, nicht übersteigt.

5. Verfahren nach einem der vorherigen Ansprüche, wobei das Ausüben des Drucks und der Temperatur für mindestens 35 Sekunden, insbesondere mindestens 45 Sekunden, insbesondere mindestens 60 Sekunden, insbesondere mindestens 90 Sekunden, insbesondere mindestens 4 Minuten, erfolgt.

6. Verfahren nach einem der vorherigen Ansprüche, wobei der Kunststoff ein Kunststoff mit einem Schmelzpunkt oder Schmelzbereich zwischen 200°C und 265°C, insbesondere zwischen 225°C und 250°C, insbesondere zwischen 230°C und 245°C, ist.

7. Verfahren nach einem der vorherigen Ansprüche, wobei der thermoplastische Kunststoff ein Polyester ist.

8. Verfahren nach einem der vorherigen Ansprüche, wobei der Kern und der Mantel der Bikomponentenfaser aus Polyester oder Polyester-Copolymer bestehen, wobei der Kern aus einem Polyester oder Polyester-Copolymer mit einer höheren Erweichungstemperatur als der Mantel besteht.

9. Verfahren nach Anspruch 8, wobei der Kern aus einem Polyester mit einer Erweichungstemperatur über 190°C und der Mantel aus einem Polyester mit einer Erweichungstemperatur zwischen 140°C und 160°C, insbesondere zwischen 145°C und 155°C, besteht.

10. Verfahren nach einem der vorhergehenden Ansprüche, wobei das Polyester Polyethylenterephtalat (PET) umfasst.

11. Verfahren nach einem der vorherigen Ansprüche, wobei der Anteil der Bikomponentenfaser an den Fasern 10 Gew.-% bis 70 Gew.-%, insbesondere 20 Gew.-% bis 60 Gew.-%, insbesondere 40 Gew.-% bis 50 Gew.-%, beträgt.

12. Verfahren nach einem der vorherigen Ansprüche, wobei das Bindemittel ein Acrylat, Acrylnitril-Butadien, Acrylat-Vinylacetat, Ethylen-Vinylacetat, Polyurethan, Polyvinylacetat-Homopolymer, Polyvinylidenchlorid, Silikon, Styrolacrylat und/oder Styrolbutadien umfasst.

13. Verfahren nach einem der vorherigen Ansprüche, wobei die Aktivkohlepartikel gebunden werden, indem eine Dispersion der Aktivkohlepartikel und des Bindemittels in einem polaren Lösungsmittel, insbesondere einem wässrigen Lösungsmittel, insbesondere Wasser, auf das Vlies (20) aufgebracht und das Vlies (20) dann auf eine Temperatur oberhalb des Siedepunkts des Lösungsmittels, insbesondere oberhalb von 100°C, insbesondere auf eine Temperatur von 120°C bis 150°C, erhitzt wird.

14. Verfahren nach einem der vorherigen Ansprüche, wobei das Vlies (20) durch die Prägeform (14) einseitig oder zweiseitig geprägt wird.

15. Verfahren nach einem der vorherigen Ansprüche, wobei mittels eines Stanzwerkzeugs oder der Prägeform (14) mindestens ein Loch (12) zur Fixierung des Filters, insbesondere im ersten Bereich (22), in den Filter (10) gestanzt wird.

16. Filter (10) für die Adsorption flüchtiger Kohlenwasserstoffe aus einer Mehrzahl von Lagen eines Vlieses (20), wobei das Vlies (20) thermisch fusionierbare Fasern umfasst, wobei an die Oberfläche der Fasern mittels eines Bindemittels Aktivkohlepartikel gebunden sind, wobei die Fasern aus mindestens einem thermoplastischen Kunststoff mit einem Schmelzpunkt oder Schmelzbereich oberhalb von 200°C bestehen, wobei die Mehrzahl von Lagen des Vlieses (20) durch Ausüben von Druck und eine Temperatur von höchstens 190°C in eine Form gebracht sind, wobei das Vlies (20) in mindestens einem ersten Bereich (22) so hoch verdichtet ist, dass dadurch die Form aufrechterhalten wird und in mindestens einem zweiten Bereich (24) weniger hoch verdichtet ist, um dadurch im zweiten Bereich (24) eine bessere Adsorption zu ermöglichen.

17. Filter (10) nach Anspruch 16, wobei der Filter (10) nach einem Verfahren gemäß einem der Ansprüche 1 bis 15 hergestellt ist.

## Claims

1. A method of producing a filter (10) for adsorbing volatile hydrocarbons from a nonwoven fabric (20), wherein the nonwoven fabric (20) comprises thermally fusionable fibers, wherein a binder is used to bind activated carbon particles to the surface of the fibers, wherein the fibers consist of at least one thermoplastic polymer having a melting point or melting range above 200°C, wherein the nonwoven fabric (20) is brought into a desired shape using an embossing mold (14) by exertion of pressure and by a temperature of at most 190°C, wherein a plurality of plies of the nonwoven fabric (20) are bonded together by the exertion of the pressure and by the temperature, wherein the nonwoven fabric (20) in the step of bringing it into shape is sufficiently densified in at least one first region (22) to retain the shape and less densified in at least one second region (24) in order thereby to make better adsorption possible in the second region (24).

2. The method as claimed in claim 1, wherein the nonwoven fabric (20) comprises thermally fusioned fibers.

3. The method as claimed in any of the preceding claims, wherein the fibers comprise at least one bi-component fiber having a sheath and a core.

4. The method as claimed in any of the preceding claims, wherein the temperature does not exceed 178°C, in particular 170°C, in particular 160°C, in particular 150°C.

5. The method as claimed in any of the preceding claims, wherein the pressure and temperature are exerted for at least 35 seconds, in particular at least 45 seconds, in particular at least 60 seconds, in particular at least 90 seconds, in particular at least 4 minutes.

6. The method as claimed in any of the preceding claims, wherein the polymer is a polymer having a melting point or melting range between 200°C and 265°C, in particular between 225°C and 250°C, in particular between 230°C and 245°C.

7. The method as claimed in any of the preceding claims, wherein the thermoplastic polymer is a polyester.

8. The method as claimed in any of the preceding claims, wherein the core and the sheath of the bi-component fiber consist of polyester or polyester copolymer, wherein the core consists of a polyester or polyester copolymer having a higher softening temperature than the sheath.

9. The method as claimed in claim 8, wherein the core consists of a polyester having a softening temperature above 190°C and the sheath consists of a polyester having a softening temperature between 140°C and 160°C, in particular between 145°C and 155°C.

10. The method as claimed in any of the preceding claims, wherein the polyester comprises polyethylene terephthalate (PET).

11. The method as claimed in any of the preceding claims, wherein the fraction of the fibers which is attributable to the bi-component fiber is 10 wt% to 70 wt%, in particular 20 wt% to 60 wt%, in particular 40 wt% to 50 wt%.

12. The method as claimed in any of the preceding claims, wherein the binder comprises an acrylate, acrylonitrile-butadiene, acrylate-vinyl acetate, ethylenevinyl acetate, polyurethane, polyvinyl acetate homopolymer, polyvinylidene chloride, silicone, styrene acrylate and/or styrene butadiene.

13. The method as claimed in any of the preceding claims, wherein the activated carbon particles are bound by a dispersion of the activated carbon particles and of the binder in a polar solvent, in particular an aqueous solvent, in particular water, being applied to the nonwoven fabric (20) and the nonwoven fabric (20) then being heated to a temperature above the boiling point of the solvent, in particular above 100°C, in particular to a temperature of 120°C to 150°C.

14. The method as claimed in any of the preceding claims, wherein the nonwoven fabric (20) is one-sidedly or two-sidedly embossed by the embossing mold (14).

15. The method as claimed in any of the preceding claims, wherein at least one hole (12) for fixing the filter, in particular in the first region (22), is punched into the filter (10) by means of a punching tool or the embossing mold (14).

16. A filter (10) for adsorbing volatile hydrocarbons from a plurality of plies of a nonwoven fabric (20), wherein the nonwoven fabric (20) comprises thermally fusionable fibers, wherein a binder binds activated carbon particles to the surface of the fibers, wherein the fibers consist of at least one thermoplastic polymer having a melting point or melting range above 200°C, wherein the plurality of plies of the nonwoven fabric (20) are brought into a shape by exertion of pressure and a temperature of at most 190°C, wherein the nonwoven fabric (20) is sufficiently densified in at least one first region (22) for the shape to be maintained as a result and less densified in at least one second region (24) in order thereby to make better adsorption possible in the second region (24).

17. The filter (10) as claimed in claim 16, wherein the filter (10) is obtained by a method as claimed in any of claims 1 to 15.

## Revendications

1. Procédé de fabrication d'un filtre (10) pour l'adsorption d'hydrocarbures volatiles d'un non-tissé (20), dans lequel le non-tissé (20) comprend des fibres pouvant être fusionnées de manière thermique, dans lequel des particules de charbon actif sont liées à la surface des fibres au moyen d'un liant, dans lequel les fibres se composent d'au moins un plastique thermoplastique avec un point de fusion ou une plage de fusion au-dessus de 200°C, dans lequel le non-tissé (20) est amené à une forme souhaitée par exercice de pression et par une température de 190°C maximum au moyen d'une matrice (14), dans lequel une pluralité de couches du non-tissé (20) sont reliées ensemble par l'exercice de la pression et par la température, dans lequel le non-tissé (20) est comprimé de manière si élevée lors de la mise en forme dans au moins une première région (22) que la forme est ainsi maintenue et est comprimé de manière moins élevée dans au moins une seconde région (24) pour permettre ainsi une meilleure adsorption dans la seconde région (24).

2. Procédé selon la revendication 1, dans lequel le non-tissé (20) comprend des fibres fusionnées de manière thermique.

3. Procédé selon une des revendications précédentes, dans lequel les fibres comprennent au moins une fibre bicomposant présentant une enveloppe et un noyau.

4. Procédé selon une des revendications précédentes, dans lequel la température ne dépasse pas 178°C, notamment 170°C, notamment 160°C, notamment 150°C.

5. Procédé selon une des revendications précédentes, dans lequel l'exercice de la pression et de la température s'effectue pendant au moins 35 secondes, notamment au moins 45 secondes, notamment au moins 60 secondes, notamment au moins 90 secondes, notamment au moins 4 minutes.

6. Procédé selon une des revendications précédentes, dans lequel le plastique est un plastique avec un point de fusion ou une plage de fusion compris entre 200°C et 265°C, notamment entre 225°C et 250°C, notamment entre 230°C et 245°C.

7. Procédé selon une des revendications précédentes, dans lequel le plastique thermoplastique est un polyester.

8. Procédé selon une des revendications précédentes, dans lequel le noyau et l'enveloppe de la fibre bicomposant se composent de polyester ou d'un copolymère de polyester, dans lequel le noyau se compose d'un polyester ou d'un copolymère de polyester avec une température de ramollissement supérieure à l'enveloppe.

9. Procédé selon la revendication 8, dans lequel le noyau se compose d'un polyester avec une température de ramollissement au-dessus de 190°C et l'enveloppe se compose d'un polyester avec une température de ramollissement comprise entre 140°C et 160°C, notamment entre 145°C et 155°C.

10. Procédé selon une des revendications précédentes, dans lequel le polyester comprend du polyéthylènetéréphtalate (PET).

11. Procédé selon une des revendications précédentes, dans lequel la proportion de la fibre bicomposant sur les fibres se monte à 10 % en poids à 70 % en poids, notamment 20 % en poids à 60 % en poids, notamment 40 % en poids à 50 % en poids.

12. Procédé selon une des revendications précédentes, dans lequel le liant comprend un acrylate, acrylonitrile-butadiène, acrylate-acétate de vinyle, éthylèneacétate de vinyle, polyuréthane, homopolymère d'acétate de polyvinyle, chlorure de polyvinylidène, silicone, styrène acrylate et/ou styrène butadiène.

13. Procédé selon une des revendications précédentes, dans lequel les particules de charbon actif sont liées en ce qu'une dispersion des particules de charbon actif et du liant est appliquée dans un solvant polaire, notamment un solvant aqueux, notamment de l'eau, sur le non-tissé (20), et le non-tissé (20) est ensuite chauffé à une température au-dessus du point d'ébullition du solvant, notamment au-dessus de 100°C, notamment à une température de 120°C à 150°C.

14. Procédé selon une des revendications précédentes, dans lequel le non-tissé (20) est estampé d'un côté ou des deux côtés par la matrice (14).

15. Procédé selon une des revendications précédentes, dans lequel au moins un trou (12) pour la fixation du filtre, notamment dans la première région (22), est perforé dans le filtre (10) au moyen d'un outil de perforation ou de la matrice (14).

16. Filtre (10) pour l'adsorption d'hydrocarbures volatiles d'une pluralité de couches d'un non-tissé (20), dans lequel le non-tissé (20) comprend des fibres pouvant être fusionnées de manière thermique, dans lequel des particules de charbon actif sont liées à la surface des fibres au moyen d'un liant, dans lequel les fibres se composent d'au moins un plastique thermoplastique avec un point de fusion ou une plage de fusion au-dessus de 200°C, dans lequel la pluralité de couches du non-tissé (20) sont amenées à une forme par exercice de pression et une température de 190°C maximum, dans lequel le non-tissé (20) est comprimé de manière si élevée dans au moins une première région (22) que la forme est ainsi maintenue et est comprimé de manière moins élevée dans au moins une seconde région (24) pour permettre ainsi une meilleure adsorption dans la seconde région (24).

17. Filtre (10) selon la revendication 16, dans lequel le filtre (10) est fabriqué selon un procédé selon une des revendications 1 à 15.
